# EUROPÄISCHE PATENTANMELDUNG

(11) **EP 4 456 010 A1**
(43) Veröffentlichungstag der Anmeldung: **30.10.2024**
(21) Anmeldenummer: 24169530.3
(22) Anmeldetag: 10.04.2024
(51) Int. Cl.: G06V 10/764, G06V 10/774, G06V 10/82, G06V 20/59

(54) **VERFAHREN UND VORRICHTUNG ZUM BEREITSTELLEN EINES MASCHINENLERNMODELLS ZUR KINETOSEERKENNUNG IN EINEM FAHRZEUG**

(30) Priorität: 28.04.2023 DE 102023203950
(71) Anmelder: VOLKSWAGEN AG, 38440 Wolfsburg (DE)
(72) Erfinder: Kaste, Jonas, 31061 Alfeld (Leine) (DE); Stahl, Felix, 38106 Braunschweig (DE); Pham Xuan, Rebecca, 38154 Königslutter (DE)

(57) **Zusammenfassung**

Die Erfindung betrifft ein Verfahren zum Bereitstellen eines Maschinenlernmodells (20) zur Kinetoseerkennung in einem Fahrzeug (50), wobei ein multimodaler Trainingsdatensatz (10) mit einem Kinetosezustand (70) als Grundwahrheit (14) erhalten wird, wobei aus dem multimodalen Trainingsdatensatz (10) ein Trainingsdatensatz (11) erzeugt wird, in dem als Modalität nur Bilddaten (12) berücksichtigt werden, wobei der erzeugte Trainingsdatensatz (11) augmentiert wird, wobei hierzu in den Bilddaten (12) beizubehaltende Merkmale (16) definiert werden, und wobei hierzu mittels einer bildgenerierenden generativen Künstlichen Intelligenz (17) unter Beibehaltung der definierten Merkmale (16) weitere Trainingsdaten durch Erzeugung weiterer Bilddaten (15) erzeugt werden, wobei ein Maschinenlernmodell (20) darauf trainiert wird, ausgehend von Bilddaten (12,15) einen Kinetosezustand (70) eines Insassen zu schätzen, wobei das Maschinenlernmodell (20) hierzu mittels zumindest eines Teils des augmentierten Trainingsdatensatzes (18) trainiert wird, und wobei das trainierte Maschinenlernmodell (20) bereitgestellt wird. Ferner betrifft die Erfindung eine Vorrichtung (1) zum Bereitstellen eines Maschinenlernmodells (20) zur Kinetoseerkennung. Weiter sind Verfahren und eine Vorrichtung (52) zum Erkennen einer Kinetose eines Insassen eines Fahrzeugs (50) beschrieben.

## Beschreibung

Die Erfindung betrifft ein Verfahren und eine Vorrichtung zum Bereitstellen eines Maschinenlernmodells zur Kinetoseerkennung in einem Fahrzeug. Ferner betrifft die Erfindung ein Verfahren und eine Vorrichtung zum Erkennen einer Kinetose eines Insassen eines Fahrzeugs.

Reiseübelkeit (Kinetose, engl. motion sickness) ist ein allgemeines Problem, das bis zu 90 % der Personen mindestens einmal in ihrem Leben erleiden. Mit zunehmendem Automatisierungsgrad der Fahraufgabe steigen die Nebentätigkeiten, die durch Insassen eines Fahrzeugs durchgeführt werden können. Dies führt zu einer verstärkten Entkopplung der Wahrnehmung und damit zu einem höherem Kinetoserisiko. Um effiziente Gegenmaßnahmen (wie beispielsweise eine Sitzkühlung und/oder eine Änderung der Sitzkonfiguration, eine Änderung einer Ambientebeleuchtung und/oder eine Modifikation einer Fahrdynamik hinsichtlich der Parametrierung von Assistenzsystemen) zu ergreifen, muss Reiseübelkeit frühzeitig erkannt werden. In Serienfahrzeugen sind Symptome wie Blässe, Schwindel, Übelkeit, Herzrasen, kalter Schweiß, Kopfschmerzen, absinkender Blutdruck oder Hyperventilation jedoch teilweise nicht direkt messbar, da die notwendige Sensorik nicht vollumfänglich zur Verfügung steht. Da zukünftig kamerabasierte Innenraumüberwachung aufgrund einer New Car Assessment Program-(NCAP)-Relevanz verfügbar sein wird, stellen bildbasierte Verfahren zur Kinetoseerkennung perspektivisch ein großes Potential dar. In diesem Zusammenhang spielen Verfahren des maschinellen Lernens bzw. der Künstlichen Intelligenz eine große Rolle.

Die Verfahren des maschinellen Lernens bzw. der Künstlichen Intelligenz benötigen für ein Training Trainingsdaten. Die Trainingsdaten werden üblicherweise in Probandenstudien mit einer Teilnehmergröße von weniger als 70 Teilnehmern gesammelt. Die Untersuchungen erfolgen hierbei in einem fest definierten Versuchssetup in Versuchsträgern, die über eine umfangreiche Sensorik verfügen, mit der der Zustand der Insassen beobachtet und in den Kontext der Fahrsituation gesetzt werden kann. Hierbei können beispielsweise physiologische Größen im direkten Kontakt (z.B. über Elektroden: Herzrate, Puls, Temperatur), physiologische Größen im indirekten Kontakt (z.B. über Kameras: Gesichtsausdruck, Puls, Emotionen), Befragungswerte (Fragebögen: Alter, Geschlecht, Herkunft,...) und Umgebungswerte erfasst und aufgezeichnet werden und über unterschiedliche Verfahren verarbeitet, ausgewertet und entsprechend dem jeweiligen Subjektivempfinden der Probanden zu einer Information über den Kinetosezustand fusioniert werden. Hierbei spielen Verfahren aus dem Feld des maschinellen Lernens bereits eine Rolle. Ein Problem ist jedoch die Generierung eines hinreichend großen Trainingsdatensatzes, um ein entsprechendes Maschinenlernmodell zu trainieren, da über Probandenversuche in sensorisch hinreichend ausgestatteten Fahrzeugen nur eine begrenzte Anzahl von Trainingsdaten generiert werden kann. So kann bei unzureichender Modellperformanz zwar das Maschinenlernmodell (z.B. eine Netzwerkarchitektur) und die Optimierung des Maschinenlernmodells (Trainingsverfahren) verändert werden, jedoch ist eine unzureichende Datenbasis nur unter erheblichem Mehraufwand zu erweitern.

Die US 11 820 402 B2 beschreibt Techniken zum Erkennen des Grades der Reisekrankheit, die ein Benutzer in einem Fahrzeug verspürt. Eine geeignete Kombination aus physiologischen Daten (Herzfrequenz, Herzfrequenzvariabilitätsparameter, Blutvolumenpuls, Sauerstoffwerte, Atmungswerte, galvanische Hautreaktion, Hautleitwerte und dergleichen), Blickdaten (z. B. Bilder des Benutzers), Fahrzeugbewegungsdaten (z. B. Beschleunigungsmesser, Gyroskopdaten, die auf Fahrzeugschwingungen hinweisen) können verwendet werden, um den Grad der Reisekrankheit zu ermitteln, die der Benutzer verspürt. Eine oder mehrere autonome Aktionen können durchgeführt werden, um eine Eskalation des Ausmaßes der Reisekrankheit, die der Benutzer verspürt, zu verhindern oder um das Ausmaß der Reisekrankheit, die der Benutzer derzeit verspürt, zu lindern.

Aus S. Park et al., Non-contact measurement of motion sickness using pupillary rhythms from an infrared camera, Sensors, Vol. 21 (14), S. 4642, 2021, ist beispielsweise ein Verfahren zum Erkennen von Kinetose ausgehend von einem Pupillendurchmesser bekannt.

Aus T. Wada et al., Effect of Driver's Head Tilt Strategy on Motion Sickness Incidence, IFAC Proceedings Volumes, Vol. 43 (13), Seiten 192-197, 2010, https://doi.org/10.3182/20100831-4-FR-2021.00035, ist beispielsweise ein Zusammenhang zwischen einer Kinetose und einer Kopfhaltung bekannt.

Der Erfindung liegt die Aufgabe zu Grunde, ein Verfahren und eine Vorrichtung zum Bereitstellen eines Maschinenlernmodells zur Kinetoseerkennung in einem Fahrzeug zu verbessern.

Die Aufgabe wird erfindungsgemäß durch ein Verfahren mit den Merkmalen des Patentanspruchs 1 und eine Vorrichtung mit den Merkmalen des Patentanspruchs 8 gelöst. Vorteilhafte Ausgestaltungen der Erfindung ergeben sich aus den Unteransprüchen.

Insbesondere wird ein Verfahren zum Bereitstellen eines Maschinenlernmodells zur Kinetoseerkennung in einem Fahrzeug zur Verfügung gestellt, wobei ein multimodaler Trainingsdatensatz mit einem Kinetosezustand als Grundwahrheit erhalten wird, wobei aus dem multimodalen Trainingsdatensatz ein Trainingsdatensatz erzeugt wird, in dem als Modalität nur Bilddaten berücksichtigt werden, wobei der erzeugte Trainingsdatensatz augmentiert wird, wobei hierzu in den Bilddaten beizubehaltende Merkmale definiert werden, und wobei hierzu mittels einer bildgenerierenden generativen Künstlichen Intelligenz unter Beibehaltung der definierten Merkmale weitere Trainingsdaten durch Erzeugung weiterer Bilddaten unter Beibehaltung einer Grundwahrheit erzeugt werden, wobei ein Maschinenlernmodell darauf trainiert wird, ausgehend von Bilddaten einen Kinetosezustand eines Insassen zu schätzen, wobei das Maschinenlernmodell hierzu mittels zumindest eines Teils des augmentierten Trainingsdatensatzes trainiert wird, und wobei das trainierte Maschinenlernmodell bereitgestellt wird.

Ferner wird insbesondere eine Vorrichtung zum Bereitstellen eines Maschinenlernmodells zur Kinetoseerkennung in einem Fahrzeug geschaffen, umfassend eine Datenverarbeitungseinrichtung, wobei die Datenverarbeitungseinrichtung dazu eingerichtet ist, einen multimodalen Trainingsdatensatz mit einem Kinetosezustand als Grundwahrheit zu erhalten, aus dem multimodalen Trainingsdatensatz einen Trainingsdatensatz zu erzeugen, in dem als Modalität nur Bilddaten berücksichtigt werden, den erzeugten Trainingsdatensatz zu augmentieren, und hierzu in den Bilddaten beizubehaltende Merkmale zu definieren, und hierzu mittels einer bildgenerierenden generativen Künstlichen Intelligenz unter Beibehaltung der definierten Merkmale weitere Trainingsdaten durch Erzeugung weiterer Bilddaten unter Beibehaltung einer Grundwahrheit zu erzeugen, ein Maschinenlernmodell darauf zu trainieren, ausgehend von Bilddaten einen Kinetosezustand eines Insassen zu schätzen, das Maschinenlernmodell hierzu mittels zumindest eines Teils des augmentierten Trainingsdatensatzes zu trainieren, und das trainierte Maschinenlernmodell bereitzustellen.

Das Verfahren und die Vorrichtung ermöglichen es, einen Trainingsdatensatz mit weiteren Trainingsdaten anzureichern und hierdurch eine Datenbasis zu verbreitern. Hierdurch kann insbesondere das Problem gelöst werden, dass für das Sammeln von Trainingsdaten nur vom Umfang her begrenzte Probandenstudien durchgeführt werden können, welche aber nicht eine Bandbreite von physiologischen und/oder physiognomischen Variationen von Insassen in einem Fahrzeug abdecken können. Dies wird erreicht durch eine Augmentierung des Trainingsdatensatzes. Ausgehend von einem multimodalen Trainingsdatensatz, das heißt, einem Trainingsdatensatz, in dem Sensordaten mehrerer unterschiedlicher Sensoren (unterschiedliche Modalitäten) zusammen mit einer jeweiligen Grundwahrheit für den Kinetosezustand vorhanden sind, wird ein Trainingsdatensatz erzeugt, in dem als Modalität nur Bilddaten berücksichtigt werden. Die Bilddaten sind insbesondere Bilddaten einer Innenraumkamera eines oder mehrerer Fahrzeuge. Da die Grundwahrheit unverändert bleibt, wird die jeweilige Grundwahrheit in den erzeugten Trainingsdatensatz übernommen. Ziel ist es, bei einer späteren Anwendung eines trainierten Maschinenlernmodells ausgehend ausschließlich von den Bilddaten einen Kinetosezustand zu schätzen. Zum Erweitern dieses Trainingsdatensatzes wird der erzeugte Trainingsdatensatz augmentiert. Hierzu wird eine bildgenerierende generative Künstliche Intelligenz verwendet. Um wesentliche, für die Erkennung des Kinetosezustands relevante Merkmale in den Bilddaten nicht zu verlieren, werden in den Bilddaten beizubehaltende Merkmale definiert. Derartige Merkmale sind beispielsweise Augen, eine Blickrichtung, eine Pupillengröße, eine Mimik usw. Mittels der bildgenerierenden generativen Künstlichen Intelligenz werden unter Beibehaltung der definierten Merkmale weitere Trainingsdaten durch Erzeugung weiterer Bilddaten unter Beibehaltung einer Grundwahrheit erzeugt. Es wird dann ein Maschinenlernmodell darauf trainiert, ausgehend von Bilddaten einen Kinetosezustand eines Insassen zu schätzen, wobei das Maschinenlernmodell hierzu mittels zumindest eines Teils des augmentierten Trainingsdatensatzes trainiert wird und wobei das trainierte Maschinenlernmodell bereitgestellt wird. Das trainierte Maschinenlernmodell kann insbesondere in Form einer strukturellen Beschreibung und Parametern (Gewichte, Hyperparameter etc.) bereitgestellt werden.

Es kann vorgesehen sein, dass der multimodale Trainingsdatensatz im Rahmen des Verfahrens gesammelt wird, beispielsweise durch Erfassen von multimodalen Sensordaten mittels einer hierfür geeigneten Sensorik in einem Fahrzeug und Bestimmen einer jeweils zugehörigen Grundwahrheit.

Im Rahmen des Augmentierens können beispielsweise einzelne oder mehrere der folgenden Eigenschaften unter Beibehaltung der definierten Merkmale verändert werden:
- ein Lichteinfall, eine Beleuchtung, Lichteffekte;
- ein Bartwuchs;
- eine Haarfarbe;
- eine Hautfarbe, eine Hautfärbung (Blässe, Röte,...);
- Hüte, Caps, Kopftücher, Mützen;
- eine Frisur;
- Teilverdeckungen im Gesicht (z.B. durch eine Brille, eine Sonnenbrille, eine Maske);
- ein Alter;
- physiognomische Merkmale: Nase, Lippen, Stirngröße, Augenbrauen usw.

Das Maschinenlernmodell ist insbesondere ein Neuronales Netz, beispielsweise ein Faltungsnetz (engl. Convolutional Neural Network, CNN), dem als Eingangsdaten insbesondere eine Zeitreihe von Bilddaten zugeführt wird und welches an einem Ausgang als Ausgangsdaten einen Kinetosezustand schätzt. Der Kinetosezustand kann beispielsweise einen Wert für eine Wahrscheinlichkeit beinhalten, der angibt, wie groß eine Wahrscheinlichkeit für das Vorliegen einer Kinetose ist. Ferner kann auch vorgesehen sein, dass an einem Ausgang ein binärer Wert ausgegeben wird, der angibt, ob eine Kinetose vorliegt oder nicht.

Die bildgenerierende generative Künstliche Intelligenz kann beispielsweise auf der Software Midjourney des Forschungsinstitut Midjourney (USA, https://www.midjourney.com/), auf der Software Stable Diffusion (stability.ai/stable-image) oder auf der Software DALL-E von OpenAI (https://labs.openai.com/) oder einer gleichartigen und/oder gleichwirkenden bildgenerierenden generativen Künstlichen Intelligenz basieren. Bei diesen Softwareanwendungen ist es möglich, die jeweilige bildgenerierende generative Künstliche Intelligenz mittels eines als Text formulierten Prompts zu steuern, wozu der Prompt der bildgenerierenden Künstlichen Intelligenz als Eingabe zugeführt wird. Ausgehend von dem als Eingabe zugeführten Prompt generiert die bildgenerierende Künstliche Intelligenz ein Bild als Ausgabe. Ferner ist es insbesondere möglich, der bildgenerierenden generativen Künstlichen Intelligenz ein Bild als (zusätzliche) Eingangsdaten zuzuführen. Über den Prompt kann das Bild gezielt in seinen Eigenschaften verändert werden. Im Rahmen des Verfahren wird insbesondere diese Funktionalität ausgenutzt. Die bildgenerierende generative Künstliche Intelligenz wird insbesondere über eine hierfür eingerichtete Schnittstelle eingebunden. Die Schnittstelle ist insbesondere Teil der Vorrichtung. Die bildgenerierende generative Künstliche Intelligenz muss nicht Teil der Vorrichtung sein, sondern kann beispielsweise in der Cloud oder mittels eines zentralen Servers bereitgestellt werden.

Teile der Vorrichtung, insbesondere die Datenverarbeitungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind. Die Datenverarbeitungseinrichtung umfasst insbesondere mindestens eine Recheneinrichtung und mindestens einen Speicher.

In einer Ausführungsform ist vorgesehen, dass das Bereitstellen des trainierten Maschinenlernmodells das Einladen des trainierten Maschinenlernmodells in einen Speicher eines Steuergeräts eines Fahrzeugs umfasst. Insbesondere werden eine strukturelle Beschreibung und Parameter des trainierten Maschinenlernmodells in den Speicher des Steuergeräts geladen. Das trainierte Maschinenlernmodell kann dann durch das Steuergerät verwendet werden.

In einer Ausführungsform ist vorgesehen, dass der bildgenerierenden generativen Künstlichen Intelligenz zum Augmentieren jeweils ein Bilddatum des ursprünglichen Trainingsdatensatzes zugeführt wird, wobei mittels eines Prompts der generativen Künstlichen Intelligenz zu verändernde Eigenschaften des jeweils zugeführten Bilddatums und die definierten beizubehaltenden Merkmale vorgegeben werden. Die generative Künstliche Intelligenz kann hierdurch gezielt angewiesen werden, auf welche Weise das Bilddatum des ursprünglichen Trainingsdatensatzes verändert werden soll. Beispielsweise kann vorgesehen sein, eins oder mehrere der voranstehend aufgelisteten Eigenschaften zu verändern, beispielsweise eine Blickrichtung und/oder eine Augenpartie einer Person im Bilddatum des ursprünglichen Trainingsdatensatzes beizubehalten. Ein beispielhafter allgemeiner Prompt hierzu könnte wie folgt lauten: "*Generiere eine Vielzahl von Variationen dieser Abbildung, bei denen die Merkmale X und Y [bzw. mehr oder weniger Merkmale] verändert werden, behalte jedoch die Merkmale A und 8 [bzw. mehr oder weniger Merkmale] der in der bereitgestellten Abbildung abgebildeten Person bei".* Konkret könnte ein Beispiel sein: "*Generiere eine Vielzahl von Variationen dieser Abbildung, bei denen eine Haarfarbe und eine Frisur verändert werden, behalte jedoch eine Blickrichtung und die Augenpartie der in der bereitgestellten Abbildung abgebildeten Person bei*"*.*

In einer Ausführungsform ist vorgesehen, dass die mittels der bildgenerierenden generativen Künstlichen Intelligenz erzeugten Bilddaten mittels eines menschlichen Experten überprüft und/oder ausgewählt werden. Hierdurch können die erzeugten Bilddaten einer menschlichen Qualitätskontrolle unterzogen werden. Insbesondere kann vorgesehen sein, dass ein menschlicher Experte hierzu die erzeugten Bilddaten sichtet, ungeeignete Bilddaten aussortiert und geeignete Bilddaten beibehält. Als Kriterium für eine Qualität der erzeugten Bilddaten kann beispielsweise herangezogen werden, ob der Experte die erzeugten Bilddaten eindeutig als maschinengeneriert identifizieren kann oder nicht, beispielsweise weil Proportionen und/oder Details in den erzeugten Bilddaten nicht der Realität und/oder der Physiognomie eines Menschen entsprechen können.

In einer Ausführungsform ist vorgesehen, dass eine Qualität des trainierten Maschinenlernmodells bewertet wird, wobei der erzeugte Trainingsdatensatz verändert wird, wenn die Qualität unterhalb eines vorgegebenen Schwellwertes liegt. Hierdurch kann eine automatisierte Überprüfung einer Robustheit beim Erkennen der Kinetose erfolgen. Als Qualitätskriterium kann beispielsweise eine Erkennungssicherheit anhand eines Teils des Trainingsdatensatzes bestimmt werden, wobei dieser Teil des Trainingsdatensatzes vor dem Training aussortiert wird und beim Training des Maschinenlernmodells nicht mit berücksichtigt wird. Anhand der jeweiligen Grundwahrheit der einzelnen Trainingsdaten in diesem Teil kann die jeweilige Ausgabe bewertet werden. Unterschreitet beispielsweise ein Anteil von richtig erkannten Kinetosezuständen den vorgegebenen Schwellwert (z.B. 0,9 bzw. 90 % der Fälle), so wird der Trainingsdatensatz verändert.

In einer Ausführungsform ist vorgesehen, dass zum Verändern mittels der bildgenerierenden generativen Künstlichen Intelligenz unter Beibehaltung der definierten Merkmale weitere Trainingsdaten durch Erzeugung weiterer Bilddaten unter Beibehaltung der Grundwahrheit erzeugt werden. Es kann vorgesehen sein, dass hierbei gezielt weitere Bilddaten mit bestimmten bzw. vorgegebenen Eigenschaften erzeugt werden.

In einer Ausführungsform ist vorgesehen, dass zum Verändern Trainingsdaten aus dem erzeugten Trainingsdatensatz entfernt werden. Hierdurch kann gezielt ein Schwerpunkt auf bestimmte Eigenschaften gesetzt werden. Gleichzeitig kann alternativ oder zusätzlich vorgesehen sein, weitere Trainingsdaten dem Trainingsdatensatz hinzuzufügen. Es kann beispielsweise vorgesehen sein, dass eine Zusammensetzung der Trainingsdaten im Trainingsdatensatz verändert wird, indem Trainingsdaten mit bestimmten Eigenschaften entfernt werden und Trainingsdaten mit bestimmten Eigenschaften hinzugefügt werden.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Ferner wird insbesondere auch ein Verfahren zum Erkennen einer Kinetose eines Insassen eines Fahrzeugs zur Verfügung gestellt, wobei Bilddaten des Insassen mittels einer Kamera erfasst werden, wobei die erfassten Bilddaten mittels eines trainierten Maschinenlernmodells ausgewertet werden, wobei das trainierte Maschinenlernmodell dazu trainiert ist, ausgehend von den erfassten Bilddaten einen Kinetosezustand zu schätzen, und wobei das trainierte Maschinenlernmodell gemäß einem Verfahren nach einer der in dieser Offenbarung beschriebenen Ausführungsformen trainiert wurde, und wobei der geschätzte Kinetosezustand ausgegeben wird.

Es kann vorgesehen sein, dass ausgehend von dem ausgegebenen Kinetosezustand mindestens eine Maßnahme ausgelöst wird, wobei hierzu beispielsweise ein Steuersignal für eine solche Maßnahme (z.B. eine Sitzkühlung und/oder eine Änderung der Sitzkonfiguration, eine Änderung einer Ambientebeleuchtung und/oder eine Modifikation einer Fahrdynamik hinsichtlich der Parametrierung von Assistenzsystemen) erzeugt und bereitgestellt werden kann.

Weiter wird insbesondere auch eine Vorrichtung zum Erkennen einer Kinetose eines Insassen eines Fahrzeugs geschaffen, umfassend eine Kamera, die eingerichtet ist zum Erfassen von Bilddaten des Insassen, und eine Datenverarbeitungseinrichtung, wobei die Datenverarbeitungseinrichtung dazu eingerichtet ist, ein trainiertes Maschinenlernmodell bereitzustellen und die erfassten Bilddaten mittels des trainierten Maschinenlernmodells auszuwerten, wobei das trainierte Maschinenlernmodell dazu trainiert ist, ausgehend von den erfassten Bilddaten einen Kinetosezustand zu schätzen, wobei das trainierte Maschinenlernmodell gemäß einem Verfahren nach einer der in dieser Offenbarung beschriebenen Ausführungsformen trainiert wurde, und den geschätzten Kinetosezustand auszugeben.

Es wird auch ein Fahrzeug geschaffen, umfassend mindestens eine Vorrichtung zum Erkennen einer Kinetose eines Insassen eines Fahrzeugs.

Nachfolgend wird die Erfindung anhand bevorzugter Ausführungsbeispiele unter Bezugnahme auf die Figuren näher erläutert. Hierbei zeigen:
- Fig. 1: eine schematische Darstellung zur Verdeutlichung von Ausführungsformen der Vorrichtung zum Bereitstellen eines Maschinenlernmodells zur Kinetoseerkennung in einem Fahrzeug und der Vorrichtung zum Erkennen einer Kinetose eines Insassen eines Fahrzeugs;
- Fig. 2: eine schematische Darstellung zur Verdeutlichung des Erzeugens des augmentierten Trainingsdatensatzes;
- Fig. 3: ein schematisches Ablaufdiagramm zur Verdeutlichung von Ausführungsformen des Verfahrens zum Bereitstellen eines Maschinenlernmodells zur Kinetoseerkennung in einem Fahrzeug.

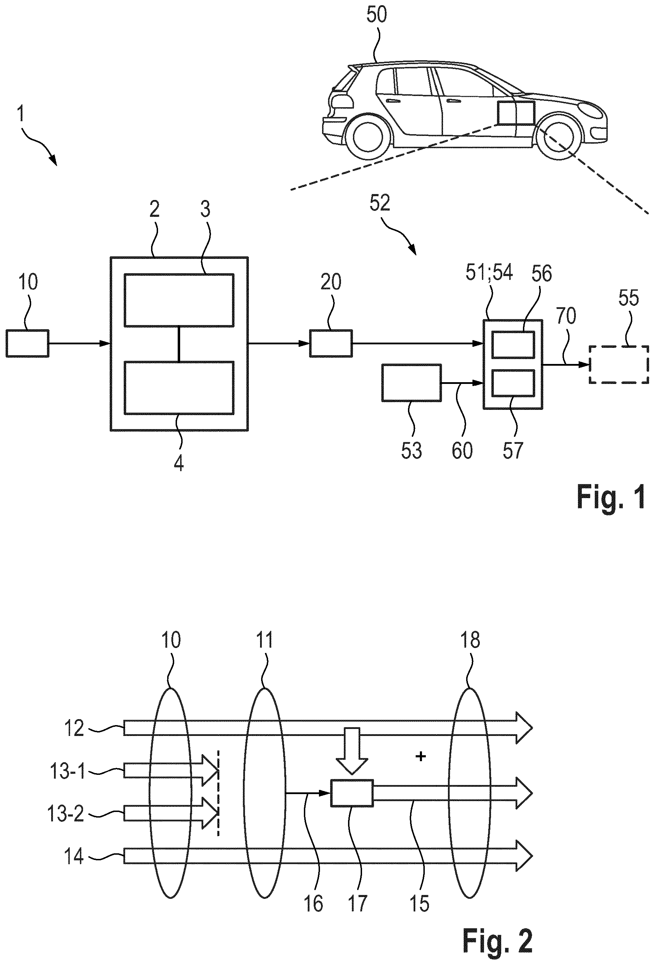

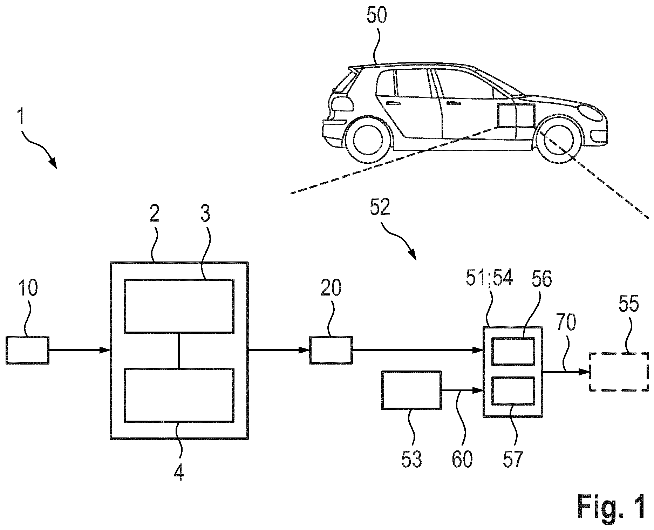

Die Fig. 1 zeigt eine schematische Darstellung einer Ausführungsform der Vorrichtung 1 zum Bereitstellen eines Maschinenlernmodells 20 zur Kinetoseerkennung in einem Fahrzeug 50. Die Vorrichtung 1 ist dazu eingerichtet, das in dieser Offenbarung beschriebene Verfahren zum Bereitstellen eines Maschinenlernmodells 20 zur Kinetoseerkennung in einem Fahrzeug 50 auszuführen.

Die Vorrichtung 1 umfasst eine Datenverarbeitungseinrichtung 2. Die Datenverarbeitungseinrichtung 2 umfasst mindestens eine Recheneinrichtung 3 und mindestens einen Speicher 4.

Die Datenverarbeitungseinrichtung 2 ist dazu eingerichtet, einen multimodalen Trainingsdatensatz 10 mit einem Kinetosezustand als Grundwahrheit 14 (Fig. 2) zu erhalten. Der multimodale Trainingsdatensatz 10 wurde beispielsweise mittels Probandenversuchen erzeugt. Es kann beispielsweise vorgesehen sein, dass der multimodale Trainingsdatensatz 10 die folgenden Modalitäten aufweist: Bilddaten 12 (Fig. 2), welche die überwachte Person zeigen, und sonstige Modalitäten 13-x (Fig. 2), beispielsweise eine erfasste Herzfrequenz der überwachten Person, ein Blutdruck der überwachten Person, eine Hautleitfähigkeit der überwachten Person usw. Ausgehend von physiologischen Größen, die mittels eines direkten Kontaktes zur überwachten Person erfasst wurden (z.B. mittels Elektroden, Herzfrequenz, Puls, Temperatur,...) und physiologischen Größen, die mittels indirektem Kontakt zur überwachten Person erfasst wurden (z.B. mittels Kameras: Gesichtsausdruck, Puls, Emotionen,...), Befragungswerten (z.B. mittels Fragebögen: Alter, Geschlecht, Herkunft,...) und Eigenschaften eines Umfelds wird eine Grundwahrheit 14 (Fig. 2) für den multimodalen Trainingsdatensatz 10 bestimmt. Insbesondere kommt einem Subjektivempfinden der überwachten Person hierbei eine besondere Bedeutung zu. Das Subjektivempfinden kann beispielsweise über Fragebögen direkt bei der überwachten Person abgefragt werden. Die jeweiligen Trainingsdaten liegen insbesondere als Zeitreihen vor, denen eine jeweilige Grundwahrheit 14 zugeordnet ist. Die Grundwahrheit 14 kann beispielsweise binär ausgebildet sein, das heißt, lediglich die Zustände "Kinetose liegt nicht vor" und "Kinetose liegt vor" aufweisen. Es kann jedoch auch vorgesehen sein, dass die Grundwahrheit 14 in weiteren Abstufungen der Kinetose vorliegt, beispielsweise mit den Zuständen "Kinetose liegt nicht vor", "leichte Kinetose liegt vor" und "starke Kinetose liegt vor" usw.

Aus dem multimodalen Trainingsdatensatz 10 erzeugt die Datenverarbeitungseinrichtung 2 einen Trainingsdatensatz 11 (Fig. 2), in dem als Modalität nur Bilddaten 12 (Fig. 2) berücksichtigt werden. Hierzu werden Daten aller anderen Modalitäten 13-x entfernt und nur die Bilddaten 12 und die jeweilige Grundwahrheit 14 beibehalten, wie dies schematisch in der Fig. 2 verdeutlicht ist.

Der erzeugte Trainingsdatensatz 11 wird augmentiert. Hierzu werden in den Bilddaten 12 (Fig. 2) beizubehaltende Merkmale 16 (Fig. 2) definiert. Dies sind insbesondere Merkmale, die aussagekräftige Merkmale für das Erkennen des Kinetosezustands sind, beispielsweise eine Augenpartie, eine Blickrichtung, eine Pupillengröße und/oder eine Mimik usw. Mittels einer bildgenerierenden generativen Künstlichen Intelligenz 17 (Fig. 2) werden hierzu unter Beibehaltung der definierten Merkmale 16 weitere Trainingsdaten durch Erzeugung weiterer Bilddaten 15 (Fig. 2) unter Beibehaltung einer Grundwahrheit 14 (Fig. 2) erzeugt. Als Ergebnis liegt ein augmentierter Trainingsdatensatz 18 vor.

Die Datenverarbeitungseinrichtung 2 trainiert dann ein Maschinenlernmodell 20 darauf, ausgehend von Bilddaten einen Kinetosezustand eines Insassen zu schätzen, das Maschinenlernmodell 20 wird hierzu mittels zumindest eines Teils des augmentierten Trainingsdatensatzes 18 in an sich bekannter Weise, insbesondere im Wege des überwachten Lernens, trainiert. Das trainierte Maschinenlernmodell 20 wird bereitgestellt.

Es kann vorgesehen sein, dass das Bereitstellen des trainierten Maschinenlernmodells 20 das Einladen des trainierten Maschinenlernmodells 20 in einen Speicher eines Steuergeräts 51 eines Fahrzeugs 50 umfasst. Insbesondere kann das trainierte Maschinenlernmodell 20 in mehrere Fahrzeuge 50 eingeladen werden.

In dem Fahrzeug 50 ist eine Vorrichtung 52 (Fig. 1) zum Erkennen einer Kinetose eines Insassen ausgebildet. Die Vorrichtung 1 umfasst eine Kamera 53, die eingerichtet ist zum Erfassen von Bilddaten 60 des Insassen und eine Datenverarbeitungseinrichtung 54, wobei die Datenverarbeitungseinrichtung 54 von dem Steuergerät 51 bereitgestellt wird. Die Datenverarbeitungseinrichtung 54 umfasst mindestens eine Recheneinrichtung 56 und mindestens einen Speicher 57. Die Datenverarbeitungseinrichtung 54 ist dazu eingerichtet, das trainierte Maschinenlernmodell 20 bereitzustellen und die erfassten Bilddaten 60 mittels des trainierten Maschinenlernmodells 20 auszuwerten, wobei das trainierte Maschinenlernmodell 20, wie voranstehend beschrieben, dazu trainiert ist, ausgehend von den erfassten Bilddaten 60 einen Kinetosezustand 70 des Insassen zu schätzen. Der geschätzte Kinetosezustand 70 wird ausgegeben, beispielsweise als Kinetosezustandssignal. Der Kinetosezustand 70 wird beispielsweise einer Fahrzeugsteuerung 55 zugeführt, welche den Kinetosezustand 70 auswertet und bei Vorliegen einer Kinetose Gegenmaßnahmen einleitet, wie beispielsweise eine Sitzkühlung und/oder eine Änderung der Sitzkonfiguration, eine Änderung einer Ambientebeleuchtung und/oder eine Modifikation einer Fahrdynamik hinsichtlich der Parametrierung von Assistenzsystemen.

Es kann vorgesehen sein, dass der bildgenerierenden generativen Künstlichen Intelligenz 17 zum Augmentieren jeweils ein Bilddatum des ursprünglichen Trainingsdatensatzes 10 zugeführt wird, wobei mittels eines Prompts der generativen Künstlichen Intelligenz 17 zu verändernde Eigenschaften des jeweils zugeführten Bilddatums und die definierten beizubehaltenden Merkmale 16 vorgegeben werden. Der Prompt ist insbesondere ein textbasierter Prompt.

Es kann vorgesehen sein, dass die mittels der bildgenerierenden generativen Künstlichen Intelligenz 17 erzeugten Bilddaten 15 mittels eines menschlichen Experten überprüft und/oder ausgewählt werden.

Es kann vorgesehen sein, dass eine Qualität (eine Güte einer Ausgabe) des trainierten Maschinenlernmodells 20 bewertet wird, wobei der augmentierte Trainingsdatensatz 18 verändert wird, wenn die Qualität unterhalb eines vorgegebenen Schwellwertes liegt. Es kann beispielsweise vorgesehen sein, dass eine Qualität bzw. eine Güte der Ausgabe des trainierten Maschinenlernmodells 20 mittels eines Teils von vor dem Trainieren ausgesonderten ursprünglichen, das heißt nicht augmentierten bzw. veränderten, Bilddaten 12 überprüft wird.

Es kann vorgesehen sein, dass zum Verändern mittels der bildgenerierenden generativen Künstlichen Intelligenz 17 unter Beibehaltung der definierten Merkmale 16 weitere Trainingsdaten durch Erzeugung weiterer Bilddaten 15 unter Beibehaltung der Grundwahrheit 14 erzeugt werden. Insbesondere kann vorgesehen sein, dass eine Modellqualität bzw. eine Güte der Ausgabe des trainierten Maschinenlernmodells 20 nach angereicherten Merkmalen, die zum Augmentieren verändert wurden, ausgewertet wird und die Trainingsdaten sukzessive um diejenigen Merkmale erweitert werden, die die Modellqualität bzw. die Güte der Ausgabe des trainierten Maschinenlernmodells 20 erhöhen.

Es kann vorgesehen sein, dass zum Verändern Trainingsdaten aus dem augmentierten Trainingsdatensatz 18 entfernt werden.

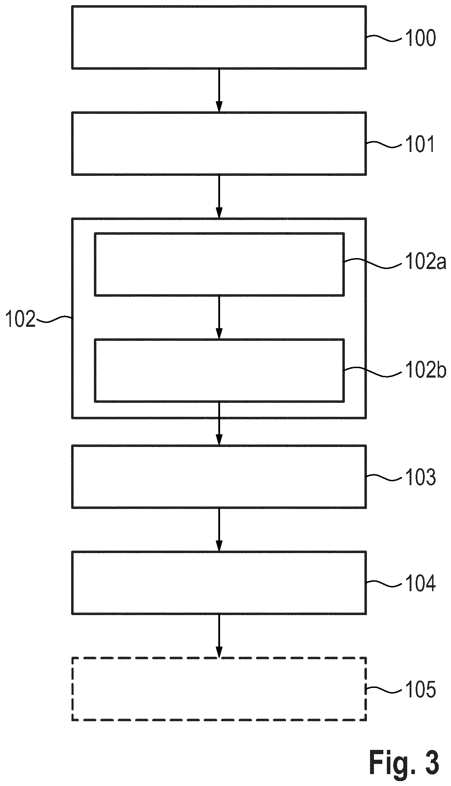

Die Fig. 3 zeigt ein schematisches Ablaufdiagramm zur Verdeutlichung von Ausführungsformen des Verfahrens zum Bereitstellen eines Maschinenlernmodells zur Kinetoseerkennung in einem Fahrzeug. Das Verfahren wird beispielsweise mittels einer Vorrichtung ausgeführt, wie diese mit Bezug auf die Fig. 1 beschrieben wurde.

In einer Maßnahme 100 wird ein multimodaler Trainingsdatensatz mit einem Kinetosezustand als Grundwahrheit erhalten.

In einer Maßnahme 101 wird aus dem multimodalen Trainingsdatensatz ein Trainingsdatensatz erzeugt, in dem als Modalität nur Bilddaten berücksichtigt werden. Hierzu werden die anderen Modalitäten entfernt. Die Grundwahrheit bleibt erhalten.

In einer Maßnahme 102 wird der erzeugte Trainingsdatensatz augmentiert. Hierzu werden in einer Maßnahme 102a in den Bilddaten beizubehaltende Merkmale definiert und in einer Maßnahme 102b werden mittels einer bildgenerierenden generativen Künstlichen Intelligenz unter Beibehaltung der definierten Merkmale weitere Trainingsdaten durch Erzeugung weiterer Bilddaten unter Beibehaltung einer Grundwahrheit erzeugt.

In Maßnahme 102b ist hierbei insbesondere vorgesehen, dass der bildgenerierenden generativen Künstlichen Intelligenz zum Augmentieren jeweils ein Bilddatum des ursprünglichen Trainingsdatensatzes zugeführt wird, wobei mittels eines Prompts der generativen Künstlichen Intelligenz zu verändernde Eigenschaften des jeweils zugeführten Bilddatums und die definierten beizubehaltenden Merkmale vorgegeben werden.

In einer Maßnahme 103 wird ein Maschinenlernmodell darauf trainiert, ausgehend von Bilddaten einen Kinetosezustand eines Insassen zu schätzen, wobei das Maschinenlernmodell hierzu mittels zumindest eines Teils des augmentierten Trainingsdatensatzes trainiert wird. Insbesondere kann vorgesehen sein, für das Trainieren einen Teil des augmentierten Trainingsdatensatzes auszusondern, um mit dem ausgesonderten Teil eine Qualität des Trainings zu überwachen, das heißt, die Trainingsdaten des ausgesonderten Teils werden insbesondere zum Überprüfen der Qualität des trainierten Maschinenlernmodells verwendet. Das Trainieren erfolgt insbesondere in an sich bekannter Weise im Wege des überwachten Lernens. Das Maschinenlernmodell erhält als Eingangsdaten insbesondere Zeitreihen der Bilddaten (insbesondere in Form eines Videos) und schätzt ausgehend hiervon den Kinetosezustand.

In einer Maßnahme 104 wird das trainierte Maschinenlernmodell bereitgestellt. Es kann hierbei vorgesehen sein, dass das Bereitstellen des trainierten Maschinenlernmodells das Einladen des trainierten Maschinenlernmodells in einen Speicher eines Steuergeräts eines Fahrzeugs umfasst.

Anschließend kann das trainierte Maschinenlernmodell in einer Maßnahme 105 verwendet werden, um ausgehend von mittels einer Kamera von einem Insassen erfassten Bilddaten den Kinetosezustand zu schätzen.

Weitere Ausführungsformen des Verfahrens wurden voranstehend bereits mit Bezug auf die Vorrichtung beschrieben.

### Bezugszeichenliste

- 1: Vorrichtung
- 2: Datenverarbeitungseinrichtung
- 3: Recheneinrichtung
- 4: Speicher
- 10: (ursprünglicher) multimodaler Trainingsdatensatz
- 11: erzeugter Trainingsdatensatz
- 12: Bilddaten
- 13-x: Daten sonstiger Modalitäten
- 14: Grundwahrheit
- 15: weitere/augmentierte Bilddaten
- 16: beizubehaltendes Merkmal
- 17: bildgenerierende generative Künstliche Intelligenz
- 18: augmentierter Trainingsdatensatz
- 20: Maschinenlernmodell
- 50: Fahrzeug
- 51: Steuergerät
- 52: Vorrichtung
- 53: Kamera
- 54: Datenverarbeitungseinrichtung
- 55: Fahrzeugsteuerung
- 56: Recheneinrichtung
- 57: Speicher
- 60: erfasste Bilddaten
- 70: Kinetosezustand
- 100-105: Maßnahmen des Verfahrens

## Patentansprüche

1. Verfahren zum Bereitstellen eines Maschinenlernmodells (20) zur Kinetoseerkennung in einem Fahrzeug (50),
wobei ein multimodaler Trainingsdatensatz (10) mit einem Kinetosezustand (70) als Grundwahrheit (14) erhalten wird,
wobei aus dem multimodalen Trainingsdatensatz (10) ein Trainingsdatensatz (11) erzeugt wird, in dem als Modalität nur Bilddaten (12) berücksichtigt werden,
wobei der erzeugte Trainingsdatensatz (11) augmentiert wird,
wobei hierzu in den Bilddaten (12) beizubehaltende Merkmale (16) definiert werden, und
wobei hierzu mittels einer bildgenerierenden generativen Künstlichen Intelligenz (17) unter Beibehaltung der definierten Merkmale (16) weitere Trainingsdaten durch Erzeugung weiterer Bilddaten (15) unter Beibehaltung einer Grundwahrheit (14) erzeugt werden,
wobei ein Maschinenlernmodell (20) darauf trainiert wird, ausgehend von Bilddaten (12,15) einen Kinetosezustand (70) eines Insassen zu schätzen,
wobei das Maschinenlernmodell (20) hierzu mittels zumindest eines Teils des augmentierten Trainingsdatensatzes (18) trainiert wird, und
wobei das trainierte Maschinenlernmodell (20) bereitgestellt wird.

2. Verfahren nach Anspruch 1, **dadurch gekennzeichnet, dass** das Bereitstellen des trainierten Maschinenlernmodells (20) das Einladen des trainierten Maschinenlernmodells (20) in einen Speicher eines Steuergeräts (51) eines Fahrzeugs (50) umfasst.

3. Verfahren nach Anspruch 1 oder 2, **dadurch gekennzeichnet, dass** der bildgenerierenden generativen Künstlichen Intelligenz (17) zum Augmentieren jeweils ein Bilddatum (12) des ursprünglichen Trainingsdatensatzes (10) zugeführt wird, wobei mittels eines Prompts der generativen Künstlichen Intelligenz (17) zu verändernde Eigenschaften des jeweils zugeführten Bilddatums (12) und die definierten beizubehaltenden Merkmale (16) vorgegeben werden.

4. Verfahren nach einem der vorangegangenen Ansprüche, **dadurch gekennzeichnet, dass** die mittels der bildgenerierenden generativen Künstlichen Intelligenz (17) erzeugten Bilddaten (15) mittels eines menschlichen Experten überprüft und/oder ausgewählt werden.

5. Verfahren nach einem der vorangegangenen Ansprüche, **dadurch gekennzeichnet, dass** eine Qualität des trainierten Maschinenlernmodells (20) bewertet wird, wobei der augmentierte Trainingsdatensatz (18) verändert wird, wenn die Qualität unterhalb eines vorgegebenen Schwellwertes liegt.

6. Verfahren nach Anspruch 5, **dadurch gekennzeichnet, dass** zum Verändern mittels der bildgenerierenden generativen Künstlichen Intelligenz (17) unter Beibehaltung der definierten Merkmale (16) weitere Trainingsdaten durch Erzeugung weiterer Bilddaten (15) unter Beibehaltung der Grundwahrheit (14) erzeugt werden.

7. Verfahren nach Anspruch 5 oder 6, **dadurch gekennzeichnet, dass** zum Verändern Trainingsdaten aus dem augmentierten Trainingsdatensatz (18) entfernt werden.

8. Vorrichtung (1) zum Bereitstellen eines Maschinenlernmodells (20) zur Kinetoseerkennung in einem Fahrzeug (50),
umfassend eine Datenverarbeitungseinrichtung (2), wobei die Datenverarbeitungseinrichtung (2) dazu eingerichtet ist, einen multimodalen Trainingsdatensatz (10) mit einem Kinetosezustand als Grundwahrheit (14) zu erhalten, aus dem multimodalen Trainingsdatensatz (10) einen Trainingsdatensatz (11) erzeugen, in dem als Modalität nur Bilddaten (12) berücksichtigt werden, den erzeugten Trainingsdatensatz (11) zu augmentieren, und hierzu in den Bilddaten (12) beizubehaltende Merkmale (16) zu definieren, und hierzu mittels einer bildgenerierenden generativen Künstlichen Intelligenz (17) unter Beibehaltung der definierten Merkmale (16) weitere Trainingsdaten durch Erzeugung weiterer Bilddaten (15) unter Beibehaltung einer Grundwahrheit (14) zu erzeugen, ein Maschinenlernmodell (20) darauf zu trainieren, ausgehend von Bilddaten (12,15) einen Kinetosezustand eines Insassen zu schätzen, das Maschinenlernmodell (20) hierzu mittels zumindest eines Teils des augmentierten Trainingsdatensatzes (18) zu trainieren, und
das trainierte Maschinenlernmodell (20) bereitzustellen.

9. Verfahren zum Erkennen einer Kinetose eines Insassen eines Fahrzeugs (50),
wobei Bilddaten (60) des Insassen mittels einer Kamera (53) erfasst werden,
wobei die erfassten Bilddaten (60) mittels eines trainierten Maschinenlernmodells (20) ausgewertet werden, wobei das trainierte Maschinenlernmodell (20) dazu trainiert ist, ausgehend von den erfassten Bilddaten (60) einen Kinetosezustand (70) zu schätzen,
und wobei das trainierte Maschinenlernmodell (20) gemäß einem Verfahren nach einem der Ansprüche 1 bis 7 trainiert wurde, und
wobei der geschätzte Kinetosezustand (70) ausgegeben wird.

10. Vorrichtung (52) zum Erkennen einer Kinetose eines Insassen eines Fahrzeugs (50), umfassend:
eine Kamera (53), die eingerichtet ist zum Erfassen von Bilddaten (60) des Insassen, und
eine Datenverarbeitungseinrichtung (54),
wobei die Datenverarbeitungseinrichtung (54) dazu eingerichtet ist, ein trainiertes Maschinenlernmodell (20) bereitzustellen und die erfassten Bilddaten (60) mittels des trainierten Maschinenlernmodells (20) auszuwerten, wobei das trainierte Maschinenlernmodell (20) dazu trainiert ist, ausgehend von den erfassten Bilddaten (60) einen Kinetosezustand zu schätzen, wobei das trainierte Maschinenlernmodell (60) gemäß einem Verfahren nach einem der Ansprüche 1 bis 7 trainiert wurde, und den geschätzten Kinetosezustand (70) auszugeben.

11. Fahrzeug (50), umfassend mindestens eine Vorrichtung (52) nach Anspruch 10.
